**Europäisches Patentamt**

(19) **European Patent Office**

**Office européen des brevets**

(11) Publication number : **0 037 359**
**B2**

(12) # NEW EUROPEAN PATENT SPECIFICATION

(45) Date of publication of the new patent specification :
**05.04.89**

(21) Application number : **81630026.3**

(22) Date of filing : **26.03.81**

(51) Int. Cl.⁴ : **F 16 D  3/79**

(54) **Flexible torque transmitting coupling and method of disassembling the coupling.**

(30) Priority : **28.03.80 US 135051**

(43) Date of publication of application :
**07.10.81 Bulletin 81/40**

(45) Publication of the grant of the patent :
**20.06.84 Bulletin 84/25**

(45) Mention of the opposition decision :
**05.04.89 Bulletin 89/14**

(84) Designated contracting states :
**BE CH DE FR GB IT LI SE**

(56) References cited :
**DE--A-- 2 834 070**
**FR--A-- 2 105 916**
**FR--A-- 2 327 443**
**US--A-- 2 182 711**
**US--A-- 3 405 760**
**US--A-- 3 654 775**
**US--A-- 3 768 276**
**Rheinstahl Hüttenwerke AG, Rigiflex (R) Wellenkup-**
**plungen 1/1969, pages 5, 6, 8, 9 and 15**

(73) Proprietor : **REXNORD INC.**
**P.O. Box 2022**
**Milwaukee, Wisconsin 53201 (US)**

(72) Inventor : **Corey, Dennis J.**
**136 - 2ND Street**
**Youngsville, PA 16371 (US)**

(74) Representative : **Weydert, Robert et al**
**OFFICE DENNEMEYER S.à.r.l. P.O. Box 1502**
**L-1015 Luxembourg (LU)**

## Description

The present invention relates to a flexible torque transmitting coupling of the type described in the precharacterizing portion of claim 1. The invention also relates to a method of disassembling the coupling.

A flexible torque transmitting coupling employing a pilot ring to maintain alignment of the flexing element with its associated hub to insure that the coupling is balanced when it is installed is disclosed in US-A-4 055 366. The piloting is accomplished by providing radially directed precision finished surfaces on the hub and the pilot ring which engage one another to maintain alignment of the coupling after it has been balanced.

Some difficulty may be encountered, however, in attempting to assemble and disassemble the coupling in the field. The pilot ring may be difficult to remove from the hub often requiring the use of tools to pry the pilot ring from the hub which sometimes results in damage to the precision finished surfaces thereby upsetting the balance of the coupling when it is reassembled. Also, prying tools are not normally used to disassemble or assemble couplings of this type, therefore, additional tools must be made available.

A flexible torque transmitting coupling of the type according to the precharacterizing portion of claim 1 is described in the catalogue « RIGIFLEX (R) shaft couplings » by Rheinstahl Hüttenwerke AG, published in January 1969). In the known RIGIFLEX (R) shaft coupling, and particularly in the embodiments having one pilot ring on each side of the center member, the bolts which, in the assembled condition, serve for bolting the center member to the two pilot rings, are also used during assembly to compress the flexing elements thereby moving the pilot rings axially toward the opposed hub members to provide the required space for slipping in the center member between the pilot rings. In this condition the bolts are inserted through untapped hubs in the hub member flanges and are threaded into the tapped holes of the pilot rings (Fig. 8 of the RIGIFLEX (R) catalogue). While for disassembly of the known coupling the bolts normally fastening the center member to one of the pilot rings may also be used for pulling off one of the pilot rings from the center member, the bolts provided for fastening the other pilot ring to the center member cannot serve without additional tools for removing that pilot ring from the center member.

Therefore, also the second pilot ring of the RIGIFLEX (R) coupling is difficult to remove from the center member and prying tools must be used which may cause damage to the precision finished surfaces.

The object of the invention is to improve the known coupling such that the same hardware used for assembling the coupling may also be used, without additional prying tools or the like, for removing the two pilot rings during disassembly.

To achieve this the coupling according to the invention is characterized by the features claimed in the characterizing portion of claim 1.

For disassembling the coupling the first and second bolt means are removed, then the first pilot ring is pulled off from its support flange by inserting the first bolt means into the second untapped holes in one of the center member flanges and screwing the first bolt means into the tapped holes in the first pilot ring, and thereafter the second pilot ring is pushed off from its support flange by screwing the second bolt means into the second tapped holes in the support flange.

The flexing element is preferably of a « slabbed » outer peripheral configuration allowing direct axial accessibility to the holes in the center member flange and pilot ring tapped holes. The flexing element is connected to both the center member flange and the pilot ring in well known fashion to provide a flexible joint that accommodates misalignment between the center member and the hub.

The operation of the flexible torque transmission coupling of the present invention will become more apparent from a reading of the following detailed description of the preferred embodiment made with reference to the accompanying drawings in which :

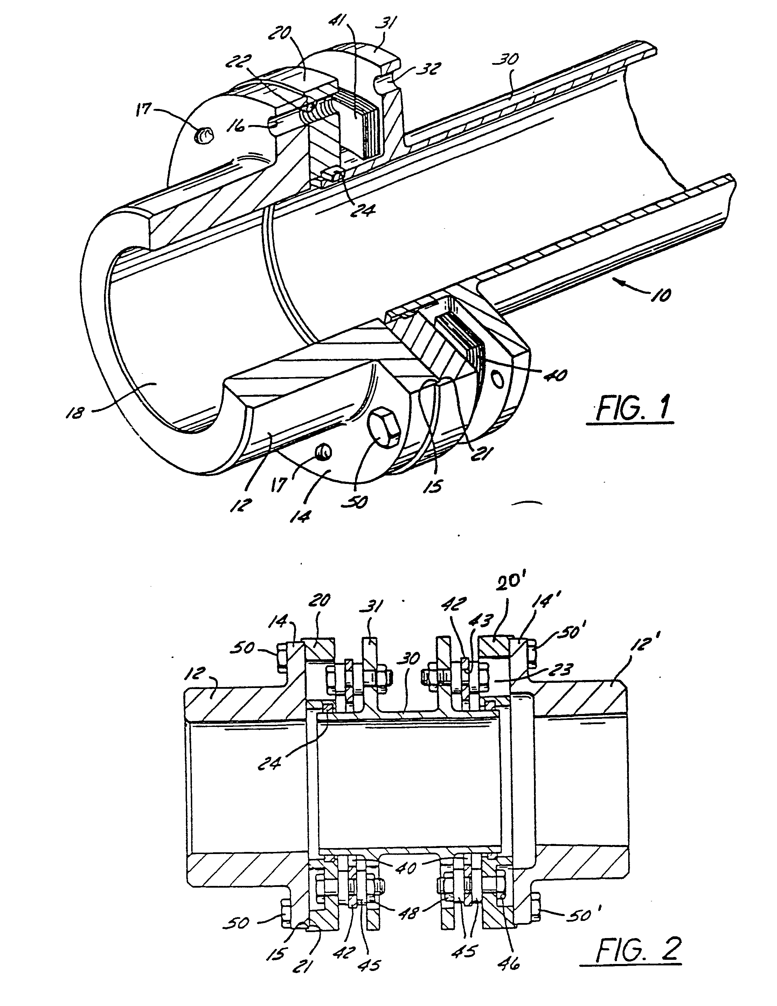

Figure 1 is a partially cutaway perspective view of a coupling constructed in accordance with the principles of the present invention, and Figure 2 is a cross-sectional view of a double flexing coupling embodying the present invention.

Referring now to Figure 1, there is shown a flexible torque transmission coupling 10 embodying the present invention. The coupling 10 comprises a hub 12 having a radially directed flange 14 with a precision finished radially directed surface 15 around the circumference of the flange 14. There is a bore 18 in the hub 12 for connection of the coupling 10 to a shaft (now shown). In the flange 14 of the hub 12 there is a plurality of alternately positioned untapped holes, and tapped holes 16, 17 extending axially through the flange 14 for reasons to be discussed.

The pilot ring 20 includes a mating radially directed precision finished surface 21 that mates with the precision finished surface 15 of the hub 12 to align the pilot ring 20 and thus the flexing element 40 with the hub 12 in a manner well known to those skilled in the art. The pilot ring 20 also has axially directed tapped holes 22 aligned with the untapped holes 16 in the flange 14 of the hub 12 to secure the pilot ring 20 to the hub 12 upon assembly of the coupling.

In the embodiment shown, the axial edge of the center member 30 is positioned inwardly with respect to the radially innermost portion of the pilot ring 20. There is also provided a non-metallic buffer ring 24 between the pilot ring 20 and the center member 30 to provide a cushion for radial movement of the center member 30 in the event of a catastrophic failure of the flexible element 40.

The center member 30 also has a radially directed flange 31 with circumferentially spaced holes 32 axially aligned with the tapped holes 22 in the pilot ring 20. Space between the flange 31 of the center member 30 and the pilot ring 20 is the coupling flexing element 40 shown as comprising a plurality of flexible discs 41 held together in laminated fashion by body bound bolts that are fit into circumferentially spaced holes 43 in the flexible discs 41.

The flexing element 40 is alternately connected to the center member flange 31 and the pilot ring 20 in a well known manner such as by the bolts 46 and nuts 48 shown. Spacers 45 are provided to retain the flexing element 40 approximately in the center of the space between the center member flange 31 and the pilot ring 20. There is thus provided a flexing joint that allows the coupling 10 to accommodate misalignment of the hub 12 and the center member 30.

When the coupling 10 is assembled, selflocking hex head cap screws 50 are inserted through untapped holes 16 of the flange 14 and tightened to threadably engage the tapped holes 22 in the pilot ring 20. The precision finished piloting surfaces 15, 21 are engaged to align the flexing element 40, bolted to the pilot ring 20, with the hub 12. This is the position of the hex head cap screws 50 during normal operation of the coupling.

Disassembly of the coupling 10, if required, is accomplished by using the same hex head cap screws 50 used to assemble the coupling 10. The cap screws 50 are loosened, but, due to the close tolerance between the mating precision finished surfaces 15, 21, the pilot ring 20 may be difficult to remove from the hub 12. To remove the pilot ring 20, the cap screws 50 are inserted through the holes 32 in the flange 31 of the center member 30 to threadably engage the tapped holes 22 in the pilot ring 20. As the cap screws 50 are tightened, the flexing joint is compressed and the pilot ring 20 is pulled from one hub 12 of the coupling 10. The pilot ring 20' of the other hub 12' of the coupling 10 may be pushed from its associated hub 12' by positioning the hex head cap screws 50' in the tapped holes 17' of the hub 12' and tightening them thereby allowing the coupling 10 to be totally removed.

It is to be noted that the same cap screws 50 are used to both assemble and disassemble the coupling with the only tool required being a readily available wrench. Also, no prying or other force is required to disassemble the coupling 10 thereby reducing the possibility of damaging the precision finished piloting surfaces 15, 21 of the hub 12 and the pilot ring 20.

## Claims

1. Flexible torque transmitting coupling comprising a first and a second hub member (12, 12') each having a radially directed flange (14, 14'), a center member (30) having two radially directed flanges (31), the flange (14) of said first hub member (12) and one of the flanges (31) of the center member (30) forming a first pair of flanges and the flange (14') of said second hub member (12') and the other flange (31) of the center member (30) forming a second pair of flanges, a first pilot ring (20) having an alignment surface (21) mating with an associated alignment surface (15) on one of the flanges (14, 31) of said first pair of flanges and connected by first bolt means (50) to said one flange of said first pair of flanges, said first bolt means (50), with the coupling assembled, extending through first untapped holes (16) in said one flange of said first pair of flanges (14, 31) and being threaded into first tapped holes (22) of the first pilot ring (20), second untapped holes (32) being provided in the other flange of said first pair of flanges (14, 31) and being aligned with said first tapped holes (22) in the first pilot ring (20), a first flexing element (40) alternately connected to said first pilot ring (20) and to said other flange of said first pair of flanges, a second pilot ring (20') having an alignment surface mating with an associated alignment surface on one of the flanges (14', 31) of said second pair of flanges and connected by second bolt means (50') to said one flange of said second pair of flanges, said second bolt means (50') extending through first untapped holes in said one flange of said second pair of flanges (14', 31) and being threaded, with the coupling assembled, into first tapped holes of said second pilot ring (20'), second untapped holes being provided in the other flange of said second pair of flanges (14, 31) and being aligned with said first tapped holes in the second pilot ring (20'), and a second flexing element (40) alternately connected to said second pilot ring (20') and to the other flange of said second pair of flanges, characterized in that the first and second pilot rings (20, 20') are connected to the first and second hub member flanges (14, 14'), that each of the first and second flexing elements (40) is interconnected between one of the pilot rings (20, 20') and one of the flanges (31) of the center member (30), and that the first untapped holes (16) for receiving the bolts (50) are in the hub member flanges (14, 14'), the second untapped holes (32) are in the center member flanges (31), and in that second tapped holes (17, 17') are provided in the hub member flanges (14, 14'), said second tapped holes (17, 17') in said flanges (14, 14') being out of alignment with the first tapped holes (22) in the first and second pilot rings (20, 20').

2. Flexible torque transmitting coupling according to claim 1, characterized in that the number of said second tapped holes (17, 17') in said hub member flanges (14, 14') is the same as the number of the first untapped holes (16) in said hub member flanges (14, 14') and said second tapped holes (17, 17') and first untapped holes (16) are alternately circumferentially spaced in said hub member flanges (14, 14').

3. Method of disassembling the flexible torque transmitting coupling of claim 1, comprising removing the first bolt means (50) and the second bolt means (50'), characterized by the steps of pulling off the first pilot ring (20) from the flange of the first hub member (12) by inserting the first bolt means (50) into the second untapped holes (32) in the center member flange (31) of the first pair of flanges and screwing the first bolt means (50) into the first tapped holes (22) in the pilot ring and pushing off the second pilot ring (20') from the flange of the second hub member (12') by screwing the second bolt means (50') into the second tapped holes (17') in the flange (14') of said second hub member (12').

**Patentansprüche**

1. Drehelastische Kupplung mit einer ersten und einer zweiten Nabe (12, 12'), die jeweils einen radial gerichteten Flansch (14, 14') haben, mit einem Mittelteil (30), das zwei radial gerichtete Flansche (31) hat, wobei der Flansch (14) der ersten Nabe (12) und einer der Flansche (31) des Mittelteils (30) ein erstes Paar Flansche und der Flansch (14') der zweiten Nabe (12') und der andere Flansch (31) des Mittelteils (30) ein zweites Paar Flansche bilden, mit einem ersten Steuerring (20), der eine Ausrichtfläche (21) hat, welche mit einer zugeordneten Ausrichtfläche (15) an einem der Flansche (14, 31) des ersten Flanschpaares zusammenpaßt und durch erste Schrauben (50) mit dem einen Flansch des ersten Flanschpaares verbunden ist, wobei die ersten Schrauben (50) sich bei zusammengebauter Kupplung durch erste gewindelose Löcher (16) in dem einen Flansch des ersten Flanschpaares (14, 31) erstrecken und in erste Gewindelöcher (22) des ersten Steuerringes (20) eingeschraubt sind und zweite gewindelose Löcher (32) in dem anderen Flansch des ersten Flanschpaares (14, 31) vorgesehen und mit den ersten Gewindelöchern (22) in dem ersten Steuerring (20) ausgerichtet sind, mit einem ersten Biegeelement (40), das abwechselnd mit dem ersten Steuerring (20) und dem anderen Flansch des ersten Flanschpaares verbunden ist, mit einem zweiten Steuerring (20'), der eine Ausrichtfläche hat, die mit einer zugeordneten Ausrichtfläche an einem der Flansche (14', 31) des zweiten Flanschpaares zusammenpaßt und durch zweite Schrauben (50') mit dem einen Flansch des zweiten Flanschpaares verbunden ist, wobei die zweiten Schrauben (50') sich durch die ersten gewindelosen Löcher in dem einen Flansch des zweiten Flanschpaares (14', 31) erstrecken und bei zusammengebauter Kupplung in erste Gewindelöcher des zweiten Steuerringes (20') eingeschraubt sind und zweite gewindelose Löcher in dem anderen Flansch des zweiten Flanschpaares (14', 31) vorgesehen und mit den ersten Gewindelöchern in dem zweiten Steuerring (20') ausgerichtet sind, und mit einem zweiten Biegeelement (40), das abwechselnd mit dem zweiten Steuerring (20') und dem anderen Flansch des zweiten Flanschpaares verbunden ist, dadurch gekennzeichnet, daß der erste und der zweite Steuerring (20, 20') mit den Flanschen (14, 14') der ersten und der zweiten Nabe verbunden sind, daß das erste und das zweite Biegelement (40) jeweils zwischen einem der Steuerringe (20, 20') und einem der Flansche (31) des Mittelteils (30) angebracht ist, und daß die ersten gewindelosen Löcher (16) zum Aufnehmen der Schrauben (50) in den Nabenflanschen (14, 14'), die zweiten gewindelosen Löcher (32) in den Mittelteilflanschen (31) und die zweiten Gewindelöcher (17, 17') in den Nabenflanschen (14, 14') vorgesehen sind, wobei die zweiten Gewindelöcher (17, 17') in den Flanschen (14, 14') nicht mit den ersten Gewindelöchern (22) in dem ersten und dem zweiten Steuerring (20, 20') ausgerichtet sind.

2. Drehelastische Kupplung nach Anspruch 1, dadurch gekennzeichnet, daß die Anzahl der zweiten Gewindelöcher (17, 17') in den Nabenflanschen (14, 14') gleich der Anzahl der ersten gewindelosen Löcher (16) in den Nabenflanschen (14, 14') ist und daß die zweiten Gewindelöcher (17, 17') und die ersten gewindelosen Löcher (16) in den Nabenflanschen (14, 14') abwechselnd mit Umfangsabstand angeordnet sind.

3. Verfahren zum Demontieren der drehelastischen Kupplung nach Anspruch 1, beinhaltend das Entfernen der ersten Schrauben (50) und der zweiten Schrauben (50'), gekennzeichnet durch die Schritte Abziehen des ersten Steuerringes (20) von dem Flansch der ersten Nabe (12) durch Einführen der ersten Schrauben (50) in die zweiten gewindelosen Löcher (32) in dem Mittelteilflansch (31) des ersten Flanschpaares und Einschrauben der ersten Schrauben (50) in die ersten Gewindelöcher (22) in dem Steuerring und Abdrücken des zweiten Steuerringes (20') von dem Flansch der zweiten Nabe (12') durch Einschrauben der zweiten Schrauben (50') in die zweiten Gewindelöcher (17') in dem Flansch (14') der zweiten Nabe (12').

**Revendications**

1. Accouplement flexible de transmission de couple comprenant des premier et second moyeux (12, 12') comportant chacun une bride (14, 14') s'étendant radialement, un organe central (30) présentant deux brides (31) s'étendant radialement, la bride (14) du premier moyeu (12) et l'une des brides (31) de l'organe central (30) formant une première paire de brides et la bride (14') du second moyeu (12') et l'autre bride (31) de l'organe central (30) formant une seconde paire de brides, une première bague de guidage (20) ayant une surface d'alignement (21) coïncidant avec une surface d'alignement associée (15) sur une première bride (14, 31) de la première paire de brides et reliée, par l'intermédiaire de premiers boulons (50), à la première bride de la première paire de brides, ces premiers boulons (50) s'étendant, lorsque l'accouplement est monté, à travers des premiers trous non taraudés (16) dans la première bride de la première paire de brides (14, 31) et étant vissés dans des premiers trous taraudés (22) de la première bague de guidage (20), des seconds trous non taraudés (32) étant prévus dans la seconde bride de la première paire de brides (14, 31) et étant alignés avec les premiers trous taraudés (22) prévus dans la première bague de guidage (20), un premier élément de flexion (40) relié alternativement à la première bague de guidage (20) et à la seconde bride de la première paire de brides, une seconde bague de guidage (20') ayant une surface d'alignement coïncidant avec une surface d'alignement associée sur une première bride (14', 31) de la seconde paire de brides et reliée, par l'intermédiaire de seconds boulons (50'), à la première bride de la seconde paire de brides, ces seconds boulons (50') s'étendant à travers les premiers trous non taraudés dans la première bride de la seconde paire de brides (14', 31) et étant vissés, lorsque l'accouplement est monté, dans les premiers trous taraudés de la seconde bague de guidage (20'), des seconds trous non taraudés étant prévus dans la seconde bride de la seconde paire de brides (14', 31) et étant aligné avec les premiers trous taraudés dans la seconde bague de guidage (20'), et un second élément de flexion (40) relié alternativement à la seconde bague de guidage (20') et à la seconde bride de la seconde paire de brides, caractérisé en ce que les première et seconde bagues de guidage (20, 20') sont reliées aux brides (14, 14') des premier et second moyeux, en ce que chacun des premier et second éléments de flexion (40) assure l'interconnexion entre l'une des bagues de guidage (20, 20') et l'une des brides (31) de l'organe central (30) et en ce que les premiers trous non taraudés (16) destinés à recevoir les boulons (50) sont prévus dans les brides (14, 14') des moyeux, les seconds trous non taraudés (32) sont prévus dans les brides (31) de l'organe central, et en ce que des seconds trous taraudés (17, 17') sont prévus dans les brides (14, 14') des moyeux, ces seconds trous taraudés (17, 17') dans les brides (14, 14') n'étant pas alignés avec les premiers trous taraudés (22) prévus dont les première et seconde bagues de guidage (20, 20').

2. Accouplement flexible de transmission de couple suivant la revendication 1 caractérisé en ce que le nombre des seconds trous taraudés (17, 17') dans les brides (14, 14') des moyeux est le même que le nombre des premiers trous non taraudés (16) dans les brides (14, 14') des moyeux et en ce que les seconds trous taraudés (17, 17') et les premiers trous non taraudés (16) sont espacés alternativement, dans le sens de la circonférence, dans les brides (14, 14') des moyeux.

3. Procédé de démontage de l'accouplement flexible de transmission de couple suivant la revendication 1 dans lequel on enlève les premiers boulons (50) et les seconds boulons (50'), caractérisé par les étapes consistant à écarter la première bague de guidage (20) de la bride du premier moyeu (12) en introduisant les premières vis (50) dans les seconds trous non taraudés (32) prévus dans la bride (31) de l'organe central de la première paire de brides et à visser les premiers boulons (50) dans les premiers trous taraudés (22) prévus dans la bague de guidage, et à écarter la seconde bague de guidage (20') de la bride du second moyeu (12') en vissant les seconds boulons (50') dans les seconds trous taraudés (17') prévus dans la bride (14') du second moyeu (12').

EP 0 037 359 B2

FIG. 1

FIG. 2

1